Europäisches Patentamt

European Patent Office

Office européen des brevets

(19)

(11) Publication number : **0 514 346 A2**

# (12) EUROPEAN PATENT APPLICATION

(21) Application number : 92830144.9

(22) Date of filing : 25.03.92

(51) Int. Cl.⁵ : **G02B 5/124**, G09F 13/20

(30) Priority : 26.03.91 IT MO910045

(43) Date of publication of application :
**19.11.92 Bulletin 92/47**

(84) Designated Contracting States :
**PT**

(71) Applicant : **CORRADI, Giorgio**
**Via A. Grandi, 336**
**I-41019 Soliera (IT)**

(72) Inventor : **Corradi, Paolo**
**Via U. Foscolo, 59**
**I-41019 Soliera (IT)**
Inventor : **Corradi, Giorgio**
**Via A. Grandi, 336**
**I-41019 Soliera (IT)**

(74) Representative : **Gardi, Giuliano**
**GARDIPATENT Palazzo Prora Via Giardini, 605**
**I-41100 Modena (IT)**

(54) **Refractive film with a high degree of luminescence.**

(57)   The film, both refractive and highly luminescent, is designed to highlight the outline of a hazard or obstruction not only when invested directly with light from a natural or artificial source but also in darkness, the luminescent effect being produced by a sheet of phosphor coated material (3), and refraction by a transparent top sheet (1) of which the reverse face incorporates a matrix of optical prisms (2) anchored directly to the luminescent sheet (3); the product is developed particularly with road signs in mind.

Fig. 1

EP 0 514 346 A2

The invention relates to a refractive film with a high degree of luminescence, that is, a support manufactured generally in strip format and having high powers of refraction and luminescence from which, typically, to cut reflector elements for road signs, hazard markers etc. The prior art embraces refractive strips as used in traffic directions to highlight the outline of an obstruction or hazard when invested with the beam of a vehicle headlamp, for example at night or in conditions of poor visibility; reflectors are also used for this same purpose. The prior art likewise embraces film material coated with a phosphorescent substance; this allows an obstruction to be seen in darkness even without the aid of a beam of light, by virtue of the light which is emitted from the phosphor particles following their excitation when exposed to daylight.

Purely refractive films or reflectors tend to be less than completely effective in the absence of sufficient illumination, a factor which can give rise to serious danger precisely when obstructions cannot be seen in the more hazardous situations; similarly, whilst it is true that phosphorescent film renders an obstruction perceptible to a degree even without an incident beam of light, it does not sufficiently highlight the outline of the object in daylight hours or at dawn and dusk, especially in cases where the colour or shape of the object may be merged with or difficult to distinguish from the road and/or the immediate surroundings.

The prior art thus stands in need of considerable improvement with regard to overcoming the drawbacks outlined above.

Accordingly, the object of the invention is to provide a element for use on signs in general, and traffic signs in particular, that will be effective in marking the outline of obstructions both during and following direct exposure to luminous radiation of natural or artificial origin, not least in order to allow the identification of such obstructions and/or signs by observers who may either have no light source to hand or find themselves in a light insufficient to excite a conventional film applied to the obstruction or sign; such an element must also be inexpensive to produce, highly functional, simple to apply, and durable.

The stated object is realized through the adoption of a phosphorescent film of high luminosity, faced on the side exposed to view with a transparent reflective film and combining to create a composite film comprising, in sequence progressing from the face exposed to view through to the rear face of the backinhg material:

- a transparent sheet of plastic material measuring between 100 and 500 μm approximately in thickness, advantageously polymethyl methacrylate, of which the reverse face exhibits a continuous formation of optical prisms standing in relief, advantageously pyramidal in embodiment, greater than 50 μm in height and with an equilateral triangular base measuring approximately 180 μm per side;

- an intermediate sheet of material measuring 30 to 100 μm approximately or more in thickness and heat-sealable to the transparent film, of which the face offered to the optical prisms of the transparent film is coated with a phosphorescent substance;

- a backing sheet of plastic material compatible with and bonded to the phosphorescent layer, and measuring more than 30 μm in thickness.

Advantages afforded by the present invention are: a high degree of refraction of incident light, such as to enable identification of the outline of an obstruction over long periods even after radiation of the light has ceased; notable reliability and safety; low cost; great durability.

The invention will now be described in detail, by way of example, with the aid of the accompanying sheet of drawings, in which:

- fig 1 shows the film according to the invention, viewed in perspective and partly in section;
- fig 2 shows a self-adhesive version of the same film, viewed in perspective and partly in section.

In the drawings, 1 denotes the outermost layer of the film, i.e. the surface exposed to view, which to advantage will be in polymethyl methacrylate, or polyester, or polycarbonate or other transparent plastic material, plain or tinted, of thickness between 100 and 500 μm approx; the rear face of the outer layer 1 exhibits a continuous formation of optical prisms 2, for example pyramidal in shape with a triangular base and with the vertex directed away from the face of the layer 1 exposed to view, or cubic, or of any other suitable configuration: in the case of a pyramid-shaped prism, the height will be no less than 50 μm and the base triangular and equilateral, with sides indicatively 180 μm in length or greater.

3 denotes an intermediate layer of material some 30 to 100 μm in thickness, or even greater, of which the face exposed to view is coated with a substance having phosphorescent (or luminescent) properties and secured to the corresponding face of the outer layer 1, that is, to the prisms 2, for example by a network of heat-seal beads arranged in a hexagonal pattern.

The phoshorescent coating is constituted by a phosphorescent pigment mixed with a transparent binding agent such as acrylic, polyvinyl, epoxy or polyurethane resin; the weight ratio between the phosphorescent pigment and and the binding agent in the phosphorescent coating is 0.8:1 to 1.2:1.

The phosphorescent pigment being constituted by ZnS and Cu or ZnS, Cu and Co or (Zn, Cd)S and Cu or SrS and Bi, or CaS and Bi or (Sr, Ca)S and Bi.

4 denotes a backing layer fashioned in a material chemically compatible with the phosphor coated intermediate layer, to which it is bonded, and measuring over 30 µm thick at very least.

The materials used to fashion the outer layer 1, the phosphorescent or luminescent layer 3 and the backing layer 4 must all be heat-sealable.

5 denotes a layer of self-adhesive material with mass of 25 to 35 g/m² or thereabouts, and 6 a layer of waxed paper or protective plastic film applied externally to the self-adhesive layer.

The method of manufacture is as follows: having obtained the phosphorescent and backing layers 3 and 4 by lamination or extrusion and bonded them one to another utilizing compression and heat, for example by coextrusion, and similarly obtained the outer layer 1 by extrusion and lamination, the bonded layers 3 and 4 are heat-sealed to the face of the outer layer 1 affording the optical prisms; thereafter, the self-adhesive material 5 may be added with its protective film 6.

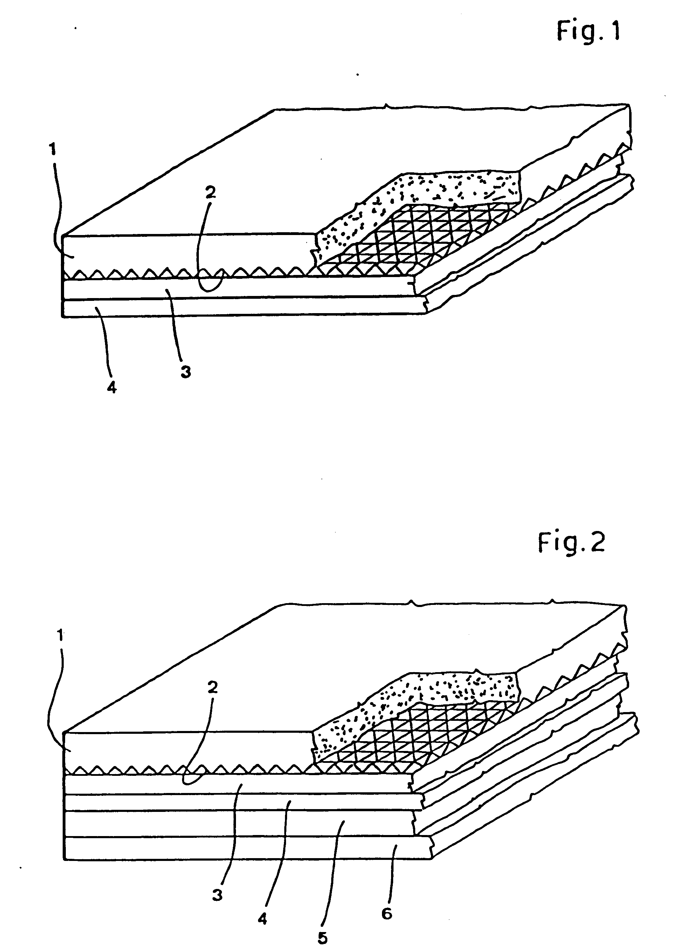

The composite film thus produced is positioned by removing the protective layer 6 and pressing into place, in the case of the self-adhesive version, or in the case of a version as in fig 1 by gluing, riveting or insertion into a frame or surround.

An incident beam of light passes through the outer layer 1 and is reflected in part by the prisms 2, thereby achieving the effect of refraction, whilst the unreflected proportion of the beam incident on the layer 1 will invest the phosphorescent surface of the intermediate layer 3, which is thus excited and able to produce a prolonged successive emission of light clearly visible to the observer even in conditions of poor visibility.

In practice, the materials, dimensions and details of design might be other than as described and illustrated while remaining equivalent in terms of the art and falling within the bounds of protection afforded by the appended claims; for example, the film thus embodied might be applied directly to the support of a road sign, or of hazards, obstructions or obstacles in general.

## Claims

1.  A refractive film with a high degree of luminescence, of the type comprising a transparent reflective layer associated with luminescent film of high luminosity, characterized in that the luminescent film is faced with the transparent reflective film on the side exposed to view, and the resulting composite film comprises, in sequence progressing from the outermost face exposed to view through to the rear face of the backing material:

    - a transparent sheet (1) of plastic material measuring between 100 and 500 µm approximately in thickness, advantageously polymethyl methacrylate, of which the reverse face exhibits a continuous formation of optical prisms (2) standing in relief, advantageously pyramidal in embodiment, greater than 50 µm in height and with an equilateral triangular base measuring approximately 180 µm per side;

    - an intermediate sheet (3) of material measuring 30 to 100 µm approximately or more in thickness and heat-sealable to the transparent film (1), of which the face offered to the optical prisms (2) of the transparent film is coated with a phosphorescent substance;

    - a backing sheet (4) of plastic material compatible with and bonded to the phosphorescent layer (3), and measuring more than 30 µm in thickness.

2.  A film as in claim 1, characterized in that the rear face of the backing sheet (4) is faced with a layer of adhesive material (5), of depth corresponding advantageously to a mass of 25 to 35 g/m², and the adhesive layer (5) in turn is faced with a further layer of protective material (6).

3.  A film as in claims 1 and 2, characterized in that the phosphorescent layer (3) is constituted by a mixture of a phosphorescent material and a transparent binding agent with a weight ratio between the phosphorescent material and the binding agent of 0.8:1 to 1.2:1.

Fig.1

Fig.2